# DEMANDE DE BREVET EUROPEEN

(11) **EP 2 889 809 A1**
(43) Date de publication de la demande: **01.07.2015**
(21) Numéro de dépôt: 13306893.2
(22) Date de dépôt: 30.12.2013
(51) Int. Cl.: G06K 19/06

(54) **Dispositif de transformation de champ électromagnétique**

(71) Demandeur: Gemalto SA, 92190 Meudon (FR)
(72) Inventeur: Marseille, François-Xavier, 92190 MEUDON (FR); Thill, Michel, 92190 MEUDON (FR)
(74) Mandataire: Cour, Pierre

(57) **Abrégé**

L'invention se rapporte à un dispositif 100 de transformation de champ électromagnétique comportant une batterie 150, une unité de traitement 140, une antenne 130 couplée à l'unité de traitement et apte à échanger des données selon la norme ISO14443, une bobine 160 couplée à l'unité de traitement et apte à rayonner un champ électromagnétique basse fréquence correspondant à une succession de bits émulant un passage de piste magnétique.

## Description

L'invention se rapporte à un transformateur de champs électromagnétique.

Les terminaux de paiement par cartes bancaires sont composés de terminaux pouvant échanger des informations de paiement avec une carte bancaire. Un premier mode d'échange d'information est la prise d'empreinte physique de la carte à l'aide d'un tampon encreur pour récupérer les informations embossées sur la carte qui permettent d'identifier le titulaire de la carte, et le compte en banque. Ce premier mode d'échange d'information l'a rendu aujourd'hui presque obsolète car il ne permet pas de vérifier si la carte est volée et permet en plus une recopie relativement aisée d'une transaction réellement effectuée. Un deuxième mode d'échange d'information est la lecture d'une piste magnétique où l'identifiant de la carte et du compte sont enregistré sur la piste magnétique située au dos de la carte. Ce deuxième mode d'échange d'information permet au lecteur de communiquer avec un serveur distant pour vérifier la validité de la carte. C'est actuellement le mode de transaction le plus répandu dans le monde qui sert en outre de système de secours pour les échanges d'informations plus sécurisées lorsque ceux-ci ne sont pas compatibles ou sont défectueux.

Un troisième mode d'échange d'information se fait par l'intermédiaire d'un connecteur de surface relié à une puce électronique. Classiquement ce type de système est compatible avec la norme ISO7816 et autorise diverses techniques de paiement allant d'un niveau de sécurité similaire à un paiement par piste magnétique (simple échange d'information) à un niveau de sécurité très supérieure pour nécessiter l'entrée d'un code PIN par l'utilisateur et aussi l'échange de messages encryptés entre la puce électronique et un serveur distant d'établissement bancaire. Ce troisième mode est déployé majoritairement en Europe. Un quatrième mode d'échange d'information est par champ électromagnétique de proximité (Near Field Contactless ou encore NFC), tel que défini dans la norme ISO14443. Pour des raisons de concision, dans la suite de la description, l'acronyme NFC est utilisé comme synonyme de champs électromagnétique de proximité compatible avec la norme ISO14443. Le quatrième mode d'échange utilise une antenne couplée à une puce électronique qui s'alimente sur le champ électromagnétique qui sert à échanger les informations entre la carte et le lecteur. Ce quatrième mode permet d'avoir autant de possibilité de sécurisation que le troisième mode et il permet en outre la dématérialisation de la carte de paiement en l'intégrant par exemple dans un téléphone portable.

Les cartes de paiement à puce ont toujours la possibilité d'effectuer une transaction par l'intermédiaire de la piste magnétique. Ceci permet d'autoriser des transactions dans les pays ou endroit où les lecteurs ne supportent pas les cartes à puce. Un problème survient lorsque l'on utilise un téléphone en remplacement de sa carte bancaire. En effet, s'il est possible de payer en NFC avec un téléphone, le téléphone ne dispose pas de piste magnétique lisible par un terminal de paiement. L'utilisation du téléphone en substitut de carte bancaire se trouve donc limité aux points de paiement NFC.

Afin de remédier à cela, il est connu d'utiliser des émulateurs de piste magnétique pour téléphone portable intelligent. Un programme téléchargé dans le téléphone traduit le code de la piste magnétique en un signal analogique /digital qui est envoyé sur un amplificateur externe et une bobine qui traduit le signal analogique/digital en rayonnement électromagnétique correspondant à une succession de bits normalement enregistré sur la piste magnétique d'une carte. La bobine est approchée d'un lecteur de piste magnétique avant le déclenchement de l'envoi de la succession de bits émulant ainsi le passage d'une piste magnétique. Le problème principal de ce mode de paiement est que les informations de paiement sont traitées par les moyens de traitement du téléphone et donc dans un environnement ouvert qui peut être piraté et les informations assurant le paiement peuvent être volées à l'aide d'un logiciel malicieux.

A contrario, le paiement NFC est normalement exécuté dans un environnement sécurisé tel que la carte SIM, une carte SD disposant d'une puce sécurisé ou encore d'un composant sécurisé du téléphone indépendant des autres moyens de traitement du téléphone. L'environnement sécurisé dispose d'un lien de communication direct avec une antenne permettant la liaison NFC.

L'invention vise à permettre à un dispositif de paiement tel qu'un téléphone portable d'effectuer un paiement par émulation de piste magnétique avec un maximum de sécurisation des données. Afin de garder la sécurisation du NFC, l'invention fournit un dispositif qui permet de transformer un message NFC en une émulation de piste magnétique.

Plus particulièrement l'invention est un dispositif de transformation de champ électromagnétique comportant une batterie autonome, une unité de traitement, une antenne couplée à l'unité de traitement et apte à échanger des données selon la norme ISO14443, une bobine couplée à l'unité de traitement et apte à rayonner un champ électromagnétique basse fréquence correspondant à une succession de bits émulant un passage de piste magnétique.

Préférentiellement, l'unité de traitement dispose d'une mémoire volatile, ladite mémoire volatile servant à stocker toutes les informations reçues depuis l'antenne et émise via la bobine.

Egalement, l'invention se rapporte à une méthode de paiement à l'aide d'un téléphone portable sur un terminal de paiement par piste magnétique à l'aide d'un dispositif intermédiaire. Tout d'abord, il est réalisé une fourniture par le téléphone au dispositif intermédiaire des informations nécessaire à une opération de paiement via un protocole d'échange conforme à la norme ISO14443. Puis, il est réalisé une transformation par le dispositif intermédiaire desdites informations en une succession de bits correspondant à des bits mémorisés sur une piste magnétique de carte bancaire. Enfin, il est réalisé une émission par le dispositif intermédiaire d'un champ magnétique modulé par la succession de bits à proximité d'un lecteur de piste magnétique.

Le dispositif selon l'invention permet de conserver dans la puce sécurisé du téléphone toutes les informations bancaires qui sont envoyés via l'antenne NFC, éventuellement cryptés à un dispositif d'émulation de piste magnétique qui est non connecté et donc difficilement piratable.

L'invention sera mieux comprise et d'autres avantages apparaîtront à la lecture de la description qui va suivre et qui fait référence aux dessins annexés parmi lesquels :
la figure 1 représente structurellement l'invention en coupe longitudinale,
la figure 2 représente un schéma électrique simplifié de l'invention,
la figure 3 représente un 'usage de l'invention, et
la figure 4 illustre la transformation d'une chaine de bits en courant produisant un champ d'émulation de piste magnétique.

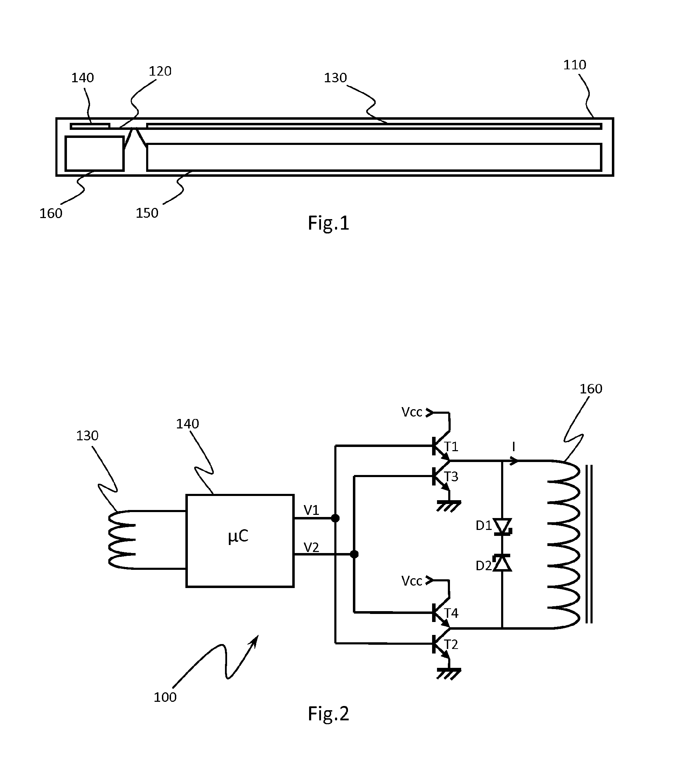

Les figures 1 et 2 représentent un dispositif 100 de transformation de champs électromagnétique selon l'invention. La figure 1 montre une coupe longitudinale du dispositif 100 et la figure 2 montre un schéma électrique simplifié. Un boitier 110 enserre un circuit imprimé 120 qui supporte une antenne 130 et une unité de traitement 140. Une Batterie 150 et une bobine 160 sont placées dans le boitier 110 et reliées au circuit imprimé 120 par l'intermédiaire de fils de liaison. La Batterie 150 sert à alimenter les composants du dispositif 100.

L'unité de traitement 140 est par exemple réalisée à l'aide d'un microcontrôleur incluant un microprocesseur, de la mémoire, une interface NFC et au moins deux sorties numérique. L'interface NFC est reliée à l'antenne 130 afin de pouvoir communiquer avec un lecteur NFC compatible avec la norme ISO14443. La mémoire est une mémoire composite comportant de la mémoire volatile et de la mémoire non volatile. La mémoire non volatile sert à mémoriser essentiellement les programmes mis en oeuvre par le microprocesseur pour effectuer la transformation d'un message NFC en émulation de piste magnétique.

Les sorties numériques du circuit de traitement 140 commandent deux paires de transistors T1 à T4 qui permettent de commuter le courant circulant dans la bobine 160. Ainsi, l'unité de traitement 140 est reliée à la bobine 160 pour commander l'émission de champ magnétique émulant un passage de piste magnétique devant un capteur de lecteur de piste magnétique. La première paire de transistors T1 et T2 permet de faire circuler un courant I positif dans la bobine 160 lorsque leur bases reçoivent une tension positive. La deuxième paires de transistors T3 et T4 permet de faire circuler un courant I négatif dans la bobine 160 lorsque leur bases reçoivent une tension positive. Ainsi il convient d'activer une paire lorsque l'on a un bit à « zéro » et l'autre paire lorsque l'on a un bit à « un ». Bien entendu, il convient de s'assurer de n'avoir qu'une seule paire de transistors en conduction. Préférentiellement une paire n'est activée que si l'autre paire n'est pas activée. Une paire de diode D1 et D2 sont connectée en série et en inverse en parallèle sur la bobine 160. Ces deux diodes D1 et D2 sont des diodes à avalanche ou des diodes Zener ayant des tensions de claquage en inverse supérieure à la tension d'alimentation afin de couper les surtensions créées par les commutations de la bobine.

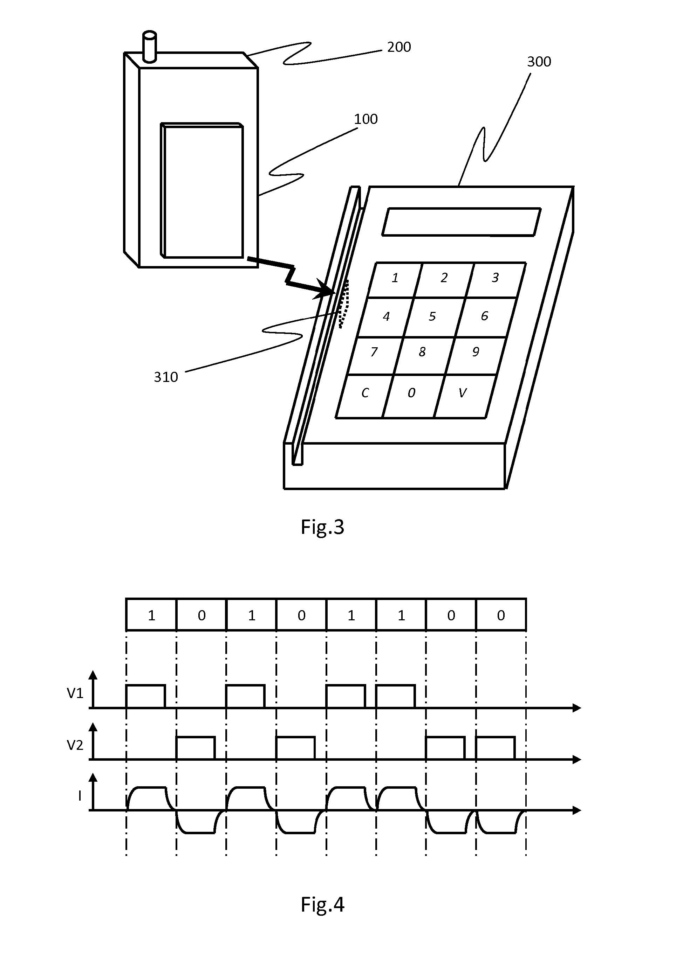

La figure 3 illustre l'utilisation du dispositif 100 de transformation de champ électromagnétique. Le dispositif 100 est positionné sur un téléphone portable 200. Le positionnement du dispositif 100 sur le téléphone se fait au plus près de l'antenne NFC du téléphone 200. Le maintien en position du dispositif 100 sur le téléphone 200 peut être assuré par l'utilisateur ou par tout moyen de maintien tel qu'un adhésif, un élastique ou une coque adaptée au téléphone permettant un maintien temporaire ou permanent du dispositif sur le téléphone.

Lors d'un paiement dans un magasin, il convient d'approcher le téléphone 200 du terminal de paiement 300 tout en assurant le maintien du dispositif 100 sur le téléphone. Idéalement, on place la partie du dispositif 100 où se trouve la bobine 160 le plus près possible du capteur 310 qui permet la lecture d'une piste magnétique. Lorsque la condition de proximité son réunies, l'utilisateur peut déclencher l'opération de paiement en appuyant sur une touche du téléphone 200 ou sur son écran tactile.

Au déclenchement de l'opération de paiement, le téléphone mets son interface NFC en mode lecteur. L'émission du champ est captée par l'antenne 130 qui réveille l'unité de traitement 140. Après authentification mutuelle du téléphone 200 et du dispositif 100, le téléphone 200 fournit au dispositif 100 un code correspondant aux informations d'identification d'un compte bancaire. Cette fourniture d'information est effectuée via l'interface NFC du téléphone 200 et donc sous le contrôle d'un circuit sécurisé du téléphone. Pour le téléphone 200, l'opération de paiement a le même niveau de sécurité qu'un paiement NFC à faible niveau de sécurité mais les données ne transitent pas par le système d'exploitation central du téléphone.

L'unité de traitement 140 mémorise le code reçu dans sa mémoire volatile de sorte qu'aucune donnée ne soit mémorisée dans le dispositif après la transaction effectuée. Le code est ensuite transformé en une suite de bits correspondant à la ceux qui seraient inscrits sur la piste magnétique d'une carte bancaire. La suite de bits est ensuite transformée en signaux de commande afin qu'un « zéro » corresponde à un courant I circulant dans un sens et qu'un « un » corresponde à un courant I circulant dans l'autre sens. Les signaux de commandes sont cadencés à une fréquence correspondant à un passage de carte dans le lecteur de sorte que la bobine 160 émette un champ magnétique modulé par la succession de bit avec un champ inversé entre une « un » et un « zéro ».

La figure 4 illustre la transformation d'une suite de bits en signaux de commande V1 et V2 puis en courant I. Comme on peut le voir les signaux de commande V1 et V2 ne sont jamais à un niveau actif en même temps. Le courant I résultant étant proportionnel à l'intensité du champ magnétique produit par la bobine 160, le capteur 310 reçoit donc un champ magnétique ayant une intensité proportionnelle au courant I avec inversion du champ entre les « zéro » et les « un ».

Dans l'exemple décrit, la batterie 150 n'est utilisée que pour fournir la tension VCC, l'unité de traitement 140 étant alimentée par le champ NFC. Toutefois, il peut être utile de rajouter un interrupteur sur le dispositif pour limiter les courants de fuite et augmenter la durée de vie de la batterie. Egalement, un interrupteur sur l'antenne 130 peut être intéressant si le dispositif de transformation de champ reste solidaire du téléphone. L'ouverture de l'antenne permet de la découpler et donc de ne pas être une source de perturbation pour d'autre application NFC du téléphone où le dispositif n'a pas à intervenir.

Selon une variante, la batterie est une batterie rechargeable qui se recharge en captant une partie du champ NFC du téléphone quand ce dernier est actif.

## Revendications

1. Dispositif (100) de transformation de champ électromagnétique comportant :
- une batterie (150) autonome,
- une unité de traitement (140),
- une antenne (130) couplée à l'unité de traitement et apte à échanger des données selon la norme ISO14443,
- une bobine (160) couplée à l'unité de traitement et apte à rayonner un champ électromagnétique basse fréquence correspondant à une succession de bits émulant un passage de piste magnétique.

2. Dispositif selon la revendication 1, dans lequel l'unité de traitement dispose d'une mémoire volatile, ladite mémoire volatile servant à stocker toutes les informations reçues depuis l'antenne et émise via la bobine.

3. Dispositif selon la revendication 1, dans lequel l'unité de traitement est reliée à la bobine pour commander l'émission de champ magnétique émulant un passage de piste magnétique.

4. Dispositif selon la revendication 1, dans lequel la batterie est une batterie rechargeable qui se recharge sur un champ magnétique compatible avec la norme ISO 14443.

5. Méthode de paiement à l'aide d'un téléphone portable (200) sur un terminal de paiement (300) par piste magnétique à l'aide d'un dispositif intermédiaire (100) **caractérisé en ce qu'**il comporte les étapes de :
- fourniture par le téléphone (200) au dispositif intermédiaire (100) des informations nécessaire à une opération de paiement via un protocole d'échange conforme à la norme ISO14443,
- transformation par le dispositif intermédiaire (100) desdites informations en une succession de bits correspondant à des bits mémorisés sur une piste magnétique de carte bancaire,
- émission par le dispositif intermédiaire d'un champ magnétique modulé par la succession de bits à proximité d'un lecteur de piste magnétique (310).
